# DEMANDE DE BREVET EUROPEEN

(11) **EP 3 820 112 A1**
(43) Date de publication de la demande: **12.05.2021**
(21) Numéro de dépôt: 20204279.2
(22) Date de dépôt: 28.10.2020
(51) Int. Cl.: H04L 29/06, G06F 21/40

(54) **PROCÉDÉ DE CONFIGURATION D ACCÈS À UN SERVICE INTERNET**

(30) Priorité: 08.11.2019 FR 1912555
(71) Demandeur: ORANGE, 75015 Paris (FR)
(72) Inventeur: BOUVET, Bertrand, 92326 Chatillon (FR)

(57) **Abrégé**

L'invention concerne un procédé de configuration d'accès à un service Internet, ledit procédé étant mis en œuvre par un serveur, dit serveur web, à la suite d'au moins une requête d'authentification réussie d'un utilisateur pour accéder audit service, ladite au moins une requête d'authentification étant initiée par un terminal dudit utilisateur, caractérisé en ce que le procédé comprend:
- une première étape d'obtention d'au moins un identifiant dudit terminal et d'au moins une donnée d'authentification présents dans ladite au moins une requête d'authentification ;
- une deuxième étape d'obtention, en fonction de ladite au moins une donnée d'authentification obtenue, d'au moins un identifiant dudit utilisateur ;
- une troisième étape d'obtention, en fonction dudit au moins un identifiant dudit utilisateur et dudit au moins un identifiant dudit terminal, d'au moins un paramètre d'accès ;
- une étape de configuration, pour ledit utilisateur, dudit service en fonction dudit au moins un paramètre d'accès.

## Description

### 1. Domaine de l'invention

L'invention s'applique aux services Internet pour lesquels il est nécessaire d'identifier et d'authentifier l'utilisateur avant qu'il puisse y avoir accès comme par exemple un portail web mis à disposition par les opérateurs de télécommunication, les banques, ou les administrations ou plus généralement tout site web mettant à disposition des utilisateurs des services Internet.

### 2. Art Antérieur

Un utilisateur accède généralement à un service web/Internet sécurisé en saisissant via un formulaire présent sur le site du service Internet, un identifiant et un mot de passe associé permettant ainsi son identification (sur la base de l'identifiant saisi) et son authentification (sur la base du mot de passe saisi). L'identifiant peut être basé sur un identifiant public comme par exemple une adresse mail, un numéro de téléphone fixe/mobile, ou bien un identifiant quelconque composé par exemple d'une suite de chiffres, d'une suite de caractères ou d'une suite de chiffres et de caractères.

Lorsque l'utilisateur valide le formulaire, son identifiant et le mot de passe associé sont alors recherchés au sein par exemple d'une base de données afin de vérifier si celui-ci a les droits d'accès. Si l'identifiant n'est pas trouvé, alors un message d'erreur est affiché à l'utilisateur qui l'invite à saisir à nouveau un login. Cette opération est généralement autorisée plusieurs fois avant que le système ne se bloque. Si l'identifiant est trouvé dans la base de données alors le mot de passe ou plus exactement son hash (empreinte numérique servant à identifier rapidement une donnée initiale réalisée via une fonction qui prend en entrée la donnée) est comparé avec celui stocké avec l'identifiant dans la base de données. Pour des raisons de sécurité, le mot de passe n'est jamais stocké en clair dans la base de données, c'est son hash. C'est pourquoi, si l'utilisateur ne se souvient plus de son mot de passe, le système demande à l'utilisateur d'en créer un nouveau. Si le mot de passe est correct, alors l'accès au service est donné à l'utilisateur. Dans le cas contraire le système demande de saisir à nouveau le mot de passe avec là aussi une limite quant au nombre de tentatives possibles avant que le système ne se bloque. Malheureusement, il est assez facile pour un fraudeur d'obtenir, par exemple en utilisant la méthode de l'hameçonnage, l'identifiant et le mot de passe d'un utilisateur.

De plus, pour faciliter l'expérience client des utilisateurs, lorsqu'une première identification/authentification est réussie, un mécanisme géré par l'IDMP (IDentity Management Platform) permet de générer un cookie de session (fichier) qui s'enregistre dans la mémoire non volatile du terminal de l'utilisateur. Ce cookie de session permet à l'utilisateur de ne pas avoir à saisir systématiquement son identifiant et son mot de passe pour accéder à ses services. En effet le cookie permet au serveur web de le reconnaître d'une page web à l'autre. Si ce fonctionnement présente des avantages en termes d'expérience utilisateur, il présente également des inconvénients en termes de sécurité. En effet, le terminal ou le cookie de session mémorisé sur le terminal peuvent être volés.

Dès lors que le fraudeur dispose du couple identifiant et mot de passe de l'utilisateur ou bien du cookie de session mémorisé sur le terminal, il a toute latitude pour agir en lieu et place de l'utilisateur ou collecter des informations sensibles telles que des informations bancaires, des contacts, des documents, etc. avec des conséquences plus ou moins graves selon le type de service comme par exemple la modification du mot de passe. L'utilisateur légitime n'a alors plus accès au service et à la modification des informations de contact. Les techniques/solutions les plus utilisées pour éviter/limiter les risques sont alors contournées. En effet les envois de messages de notification, de code (par exemple de type 3D secure) ou de courrier sont alors redirigés vers le terminal du fraudeur ou vers sa boite postale.

### 3. Exposé de l'invention

L'invention vient améliorer l'état de la technique et propose un procédé de configuration d'accès à un service Internet, ledit procédé étant mis en œuvre par un serveur, dit serveur web, à la suite d'au moins une requête d'authentification réussie d'un utilisateur pour accéder audit service, ladite au moins une requête d'authentification étant initiée par un terminal dudit utilisateur, caractérisé en ce que le procédé comprend :
- une première étape d'obtention d'au moins un identifiant dudit terminal et d'au moins une donnée d'authentification présents dans ladite au moins une requête d'authentification ;
- une deuxième étape d'obtention, en fonction de ladite au moins une donnée d'authentification obtenue, d'au moins un identifiant dudit utilisateur ;
- une troisième étape d'obtention, en fonction dudit au moins un identifiant dudit utilisateur et dudit au moins un identifiant dudit terminal, d'au moins un paramètre d'accès ;
- une étape de configuration, pour ledit utilisateur, dudit service en fonction dudit au moins un paramètre d'accès.

Avantageusement, le procédé selon l'invention permet lorsqu'un utilisateur s'authentifie avec succès à un service Internet, d'avoir par exemple au niveau du serveur qui exécute le service Internet, une vérification complémentaire de l'identité de l'utilisateur dans le but de diminuer la fraude. En effet, l'accès aux services web fonctionne majoritairement en mode « User Centric » (centré utilisateur), c'est-à-dire que l'accès à ces services est basé uniquement sur la validité d'un identifiant et mot de passe de l'utilisateur (ou le cookie de session) sans autre contrôle. Ce procédé selon l'invention permet d'ajouter un contrôle supplémentaire et de s'assurer que l'utilisateur est bien celui qu'il prétend être et donc que l'identifiant et mot de passe de l'utilisateur (ou le cookie de session) n'ont pas été usurpés.

Dans le cas où un client/utilisateur d'un opérateur de télécommunication souhaite s'authentifier auprès d'un service web opéré par son opérateur de télécommunication, le procédé va lors des deux premières étapes, obtenir un identifiant du terminal et un identifiant de l'utilisateur. Ces deux identifiants sont ensuite comparés aux identifiants de l'utilisateur attribués et/ou déclarés dans le système d'information de l'opérateur gérant les accès à Internet. En fonction du paramètre d'accès reçu, une politique d'accès au service Internet est appliquée pour l'utilisateur par configuration.

Dans le domaine particulier de la banque, la réglementation européenne évolue avec la Directive de Services de Paiement N°2 (DSP2) qui impose depuis septembre 2019 l'usage d'au moins deux mécanismes d'authentification parmi trois grandes familles d'authentification pour qu'un utilisateur puisse accéder à ses services bancaires en ligne. Le procédé peut venir avantageusement enrichir les solutions d'authentification basées sur la possession (par exemple un terminal ayant une adresse IP certifiée). Le procédé propose de plus une authentification implicite qui peut ne pas nécessiter l'intervention de l'utilisateur avec un parcours utilisateur inchangé.

On entend par service Internet, un service fourni par un prestataire et accessible via le réseau Internet. Ce service peut par exemple être accessible via une page web, un site web ou encore via une application avec une vue web. Cela comprend également les services accessibles vocalement par exemple au travers d'assistant vocaux.

On entend par requête d'authentification toute requête permettant à un utilisateur de s'authentifier auprès d'un service Internet afin qu'il puisse avoir accès aux différentes fonctionnalités proposées par le service.

On entend par donnée d'authentification, toute information présente dans la requête d'authentification permettant à l'utilisateur de s'authentifier auprès du service Internet comme par exemple un couple identifiant et mot de passe, un cookie de session, une adresse MAC, une adresse IP, une donnée biométrique comme par exemple une reconnaissance vocale.

On entend par paramètre d'accès, un paramètre qui va permettre à un utilisateur d'accéder à tout ou partie des fonctionnalités d'un service internet. Le paramètre permet ainsi de configurer, pour un utilisateur, les accès aux fonctionnalités d'un service Internet.

On entend par identifiant une suite de caractères et/ou de données binaires qui sert à identifier par exemple un utilisateur ou un terminal comme par exemple un numéro de téléphone, une adresse de messagerie, une adresse IP, une adresse MAC, un IMEI, un IMSI etc. En ce qui concerne l'identifiant d'un utilisateur, cela peut être un numéro de téléphone, un nom, une adresse ou toute autre information permettant d'identifier l'utilisateur telle qu'un numéro de sécurité sociale ou une chaîne de caractères attribuée à l'utilisateur.

Selon un mode de mise en œuvre particulier de l'invention, un tel procédé est caractérisé en ce que la troisième étape d'obtention comprend les étapes suivantes :
- une étape de transmission d'au moins un premier message, à destination d'au moins un serveur, dit serveur de confiance, comprenant au moins ledit identifiant dudit terminal et ledit identifiant dudit utilisateur ;
- une étape de réception d'au moins un second message, en provenance dudit serveur de confiance, comprenant au moins un paramètre d'accès audit service pour ledit utilisateur.

Avantageusement, ce mode de réalisation permet par exemple à un serveur web tel qu'un serveur bancaire de déléguer la vérification de l'identifiant du terminal et de l'identifiant de l'utilisateur, à un serveur, par exemple opéré par l'opérateur de télécommunication de l'utilisateur. Le serveur de l'opérateur est alors vu comme un serveur de confiance, car celui-ci dispose d'informations certifiées permettant de vérifier l'identifiant du terminal et/ou l'identifiant de l'utilisateur. En fonction du paramètre d'accès reçu, une politique d'accès au service Internet est appliquée pour l'utilisateur par configuration.

Selon une variante de ce mode de mise en œuvre particulier de l'invention, un tel procédé est caractérisé en ce que l'étape de transmission est précédée d'une étape d'obtention d'une identification dudit serveur de confiance.

Ce mode de mise en œuvre de l'invention permet par exemple de ne pas avoir à connaitre les informations concernant le serveur de confiance de façon statique par exemple via un fichier de configuration du service. Les informations et les coordonnées/ adresses pouvant être mises à jour régulièrement, le procédé aura toujours la bonne adresse. Dans le cas d'un service bancaire, le serveur bancaire va alors pouvoir connaitre dynamiquement par exemple l'adresse IP ou le nom de domaine du serveur de l'opérateur de télécommunication à contacter pour un utilisateur donné. Ainsi, quel que soit l'opérateur de l'utilisateur, le serveur bancaire dialoguera avec le serveur du bon opérateur de télécommunication.

Selon une variante de ce mode de mise en œuvre particulier de l'invention, un procédé tel que décrit ci-dessus est caractérisé en ce que ladite identification dudit serveur de confiance est obtenue à partir d'une base de données.

La base de données pouvant être mise à jour régulièrement, les informations concernant le serveur de confiance utilisées par le procédé peuvent être modifiées jusqu'à ce que le procédé soit exécuté. A noter que la base de données peut être de tous types et être ou non hébergée sur le serveur de confiance.

Selon un autre mode de mise en œuvre particulier de l'invention, un tel procédé est caractérisé en ce que ledit au moins un identifiant dudit terminal comprend une adresse dudit terminal.

Ce mode de mise en œuvre de l'invention permet d'avoir un identifiant du terminal de l'utilisateur sans qu'il y ait besoin pour l'utilisateur d'effectuer une action spécifique. Ce mode de réalisation est totalement transparent d'un point de vue expérience utilisateur. L'identifiant du terminal peut par exemple être une adresse MAC, un IMEI, un IMSI, une clef numérique chiffrée ou son adresse IP, etc.

Selon un autre mode de mise en œuvre particulier de l'invention, un procédé tel que décrit ci-dessus est caractérisé en ce que ledit au moins un identifiant dudit utilisateur comprend un numéro de téléphone et/ou une adresse de messagerie et/ou une adresse postale et/ou un nom dudit utilisateur.

Ce mode de mise en œuvre de l'invention permet par exemple d'utiliser les informations déjà renseignées par l'utilisateur lors de son inscription au service Internet comme identifiant.

Selon un autre mode de mise en œuvre particulier de l'invention, un tel procédé est caractérisé en ce que ledit au moins un identifiant dudit utilisateur est obtenu à partir d'une base de données.

Ce mode de mise en œuvre de l'invention permet d'avoir un identifiant de l'utilisateur sans qu'il y ait besoin pour l'utilisateur d'effectuer une action spécifique comme par exemple saisir via un formulaire Internet un nouvel identifiant. Ce mode de réalisation est totalement transparent d'un point de vue expérience utilisateur. De plus, la base de données pouvant être mise à jour régulièrement, les données de l'utilisateur utilisées par le procédé peuvent être modifiées jusqu'à ce que le procédé soit exécuté. Cela permet ainsi d'avoir des données et un résultat de comparaison le plus pertinent possible. A noter que la base de données peut être de tous types et être ou non hébergée sur le serveur web.

Selon un autre mode de mise en œuvre particulier de l'invention, un tel procédé est caractérisé en ce que ledit au moins un paramètre d'accès comprend des droits d'accès pour ledit utilisateur à un sous ensemble des fonctionnalités fournies par ledit service.

Ce mode de mise en œuvre de l'invention permet par exemple de configurer pour un utilisateur l'accès à certaines fonctionnalités d'un site web en fonction de la valeur du paramètre d'accès. Dans le cas où le paramètre est un booléen, la valeur 0 peut par exemple signifier que l'utilisateur n'a pas été authentifié par le serveur de confiance. Le procédé peut alors masquer certaines fonctionnalités du service Internet jugées sensibles comme par exemple l'interface homme-machine affichée au travers d'une page web du service permettant de modifier les informations d'un profil utilisateur. Ce mode de mise œuvre permet également d'avoir par exemple un paramètre d'accès par fonctionnalité ou par page web.

Corrélativement l'invention concerne également un procédé de configuration d'accès à un service Internet, ledit procédé étant mis en œuvre par un serveur, dit serveur de confiance, caractérisé en ce que le procédé comprend :
- une étape de réception d'au moins un premier message en provenance d'un serveur, dit serveur web, ledit message comprenant au moins un premier identifiant d'un terminal d'un utilisateur et au moins un identifiant dudit utilisateur ;
- une étape d'obtention, en fonction dudit au moins identifiant dudit utilisateur reçu, d'un second identifiant dudit terminal dudit utilisateur ;
- une étape d'émission d'un second message à destination dudit serveur web, ledit second message comprenant au moins un paramètre d'accès, ledit au moins un paramètre étant fonction d'une comparaison entre le premier et le second identifiant dudit terminal dudit utilisateur.

L'invention concerne également un serveur de configuration d'accès à un service Internet, dit serveur web, caractérisé en ce que ledit serveur comprend :
- un module d'obtention, suite à au moins une requête d'authentification réussie initiée par un terminal d'un utilisateur pour accéder audit service, d'au moins un identifiant dudit terminal et d'au moins une donnée d'authentification présents dans ladite requête d'authentification ;
- un deuxième module d'obtention, en fonction de ladite au moins une donnée d'authentification obtenue, d'au moins un identifiant dudit utilisateur ;
- un troisième module d'obtention, en fonction dudit au moins un identifiant dudit utilisateur et dudit moins un identifiant dudit terminal d'au moins un paramètre d'accès ;
- un module de configuration, pour ledit utilisateur, dudit service en fonction dudit au moins un paramètre d'accès.

L'invention concerne également un serveur de configuration d'accès à un service Internet, dit serveur de confiance, caractérisé en ce que ledit serveur comprend :
- un module de réception d'au moins un premier message en provenance d'un serveur, dit serveur web, ledit message comprenant au moins un premier identifiant d'un terminal d'un utilisateur et au moins un identifiant dudit utilisateur ;
- un module d'obtention, en fonction dudit au moins identifiant dudit utilisateur reçu, d'au moins un second identifiant dudit terminal dudit utilisateur ;
- un module d'émission d'un second message à destination dudit serveur web, ledit second message comprenant au moins un paramètre d'accès, ledit au moins un paramètre étant fonction d'une comparaison entre le premier et le second identifiant dudit terminal dudit utilisateur.

Système de configuration d'accès à un service Internet caractérisé en ce que le système comprend :
- au moins un terminal d'un utilisateur, et
- au moins un serveur web tel que décrit précédemment, et
- au moins un serveur de confiance tel que décrit précédemment,

le système étant caractérisé en ce que le terminal et les serveurs sont configurés pour, lorsque ledit utilisateur s'est authentifié avec succès auprès dudit serveur web, envoyer au moins un premier message comprenant au moins un premier identifiant dudit terminal dudit utilisateur et au moins un identifiant dudit utilisateur audit serveur de confiance, ledit serveur de confiance obtient alors en fonction dudit au moins un identifiant dudit utilisateur reçu au moins un second identifiant dudit terminal et génère en fonction de la comparaison réalisée entre le premier et le second identifiant dudit terminal au moins un paramètre d'accès au service émis via au moins un second message à destination dudit serveur web et lorsque ledit au moins un paramètre d'accès est reçu par ledit serveur web, ledit serveur web configure le service Internet en fonction du paramètre d'accès reçu pour ledit utilisateur..

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention concerne également un programme d'ordinateur comportant des instructions pour la mise en œuvre du procédé ci-dessus selon l'un quelconque des modes particuliers de réalisation décrits précédemment, lorsque ledit programme est exécuté par un processeur. Le procédé peut être mis en œuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif de configuration d'accès à un service Internet et ce programme d'ordinateur présentent des caractéristiques et avantages analogues à ceux décrits précédemment en relation avec le procédé de configuration d'accès à un service Internet.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[fig.1] La figure 1 illustre un exemple d'environnement de mise en œuvre selon un mode particulier de réalisation de l'invention,
[fig.2] La figure 2 illustre des étapes du procédé de configuration d'accès à un service Internet selon un mode particulier de réalisation de l'invention,
[fig.3] La figure 3 illustre l'architecture d'un dispositif mettant en œuvre l'invention selon un mode particulier de réalisation.

### 5. Description d'un mode de réalisation de l'invention

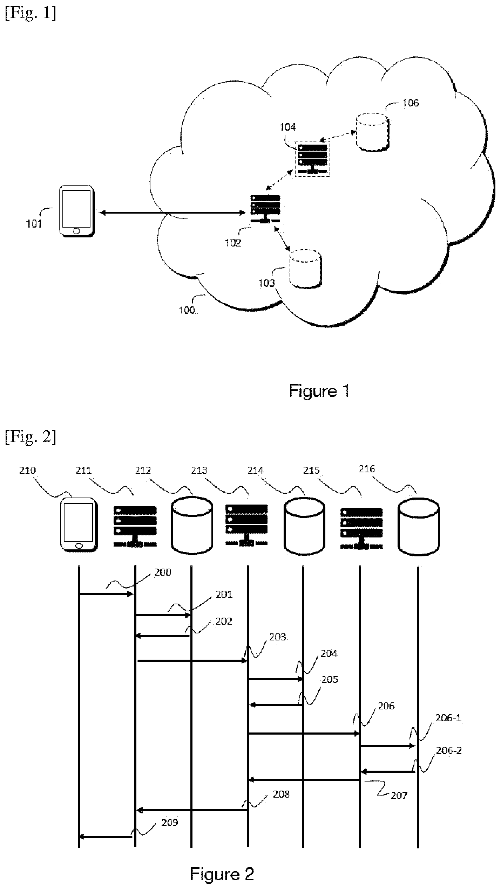

La figure 1 illustre un exemple d'environnement de mise en œuvre de l'invention selon un mode particulier de réalisation de l'invention. L'environnement de mise en œuvre comprend un terminal 101 tel qu'un téléphone mobile, un ordinateur, une télévision connectée, un serveur, un terminal destiné à l'internet des objets ou tout autre terminal apte à établir des communications selon l'état de l'art via un réseau de communication 100 avec un serveur 102. Le serveur 102, qui met en œuvre le procédé selon la présente invention, est par exemple un serveur web ou tout autre machine informatique permettant d'exécuter et de fournir des services web comme par exemple un site Internet, des pages web ou toute interface utilisateur apte à proposer du contenu à l'utilisateur du terminal 101. Le réseau de communication 100 est un réseau par exemple de type Internet ou privé apte à relayer les messages échangés entre les serveurs et les terminaux ou tout autre dispositif présent au sein du réseau de communication 100.

Le procédé peut fonctionner de manière permanente et autonome sur le serveur 102 ou bien à la suite d'une action utilisateur ou encore pendant des plages horaires déterminées par un utilisateur. Dès que le procédé est opérationnel, le procédé de configuration d'accès à un service Internet commence sur le serveur 102. Lorsque le serveur 102, et plus particulièrement un service Internet exécuté sur le serveur 102, reçoit de la part du terminal 101 un message d'authentification d'un utilisateur et que la demande d'authentification est valide, alors le service Internet va déclencher le procédé de configuration d'accès à un service Internet en lui envoyant un identifiant du terminal de l'utilisateur, appelé premier identifiant du terminal, comme par exemple l'adresse IP et/ou l'adresse MAC et/ou IMEI et/ou IMSI reçu dans le message et une donnée d'authentification de l'utilisateur utilisée lors de l'authentification comme par exemple un couple identifiant et mot de passe du service ou un cookie de session. Le procédé va alors en fonction de la donnée d'authentification de l'utilisateur, obtenir un premier identifiant de l'utilisateur par exemple récupéré dans une base de données ou tout autre espace de stockage numérique dans lequel sont stockées les informations renseignées par l'utilisateur lors de son inscription au service internet. Concrètement, le procédé peut par exemple rechercher dans l'espace de stockage numérique des informations personnelles présentes dans le profil de l'utilisateur telles qu'un numéro de téléphone, un nom, une adresse (de messagerie ou postale), ou tout autre information permettant d'identifier l'utilisateur à qui a été attribuée la donnée d'authentification qui a permis l'authentification réussie auprès du service internet hébergé sur le serveur 102. Une fois ce premier identifiant de l'utilisateur récupéré, le procédé va transmettre le couple premier identifiant du terminal de l'utilisateur et premier identifiant de l'utilisateur à un service, dit service d'accès, par exemple d'un opérateur de télécommunication, apte à connaitre les informations certifiées concernant par exemple l'accès à internet des terminaux de l'utilisateur telles que l'adresse IP attribuée au terminal de l'utilisateur. Le premier identifiant de l'utilisateur est alors recherché dans un espace de stockage numérique, comme par exemple une base de données, du service d'accès. Dans le cas particulier où le service Internet est un service Internet d'un opérateur de télécommunication et que c'est le même serveur qui héberge le service Internet et le service d'accès aux réseaux opérés par l'opérateur, l'ensemble des messages échangés se fait via des messages internes au serveur 102. Si le premier identifiant de l'utilisateur existe au sein de l'espace de stockage numérique du service d'accès, alors un deuxième identifiant du terminal de l'utilisateur associé au premier identifiant de l'utilisateur est récupéré depuis l'espace de stockage numérique du service d'accès. Le premier et le deuxième identifiant du terminal de l'utilisateur sont alors comparés et un paramètre de configuration d'accès au service Internet est alors généré en fonction de cette comparaison pour l'utilisateur.

Si la comparaison est positive le procédé peut par exemple considérer que l'utilisateur est bien celui qu'il prétend être. Le service Internet est ensuite configuré pour l'utilisateur en fonction du paramètre d'accès. A noter que toutes les manipulations des identifiants/données d'un utilisateur ou d'un terminal utilisateur via des recherches, des comparaisons ou autre, peuvent se faire sur tout ou partie des identifiants/données avec ou sans préfixe/suffixe.

Si la comparaison est négative le procédé peut par exemple choisir de n'afficher qu'une partie ou aucune des fonctionnalités du service internet et de griser ou supprimer les fonctionnalités jugées sensibles comme par exemple la modification du profil de l'utilisateur avec ses données personnelles du service Internet.

Selon un mode particulier de réalisation de l'invention, le procédé de configuration d'accès à un service Internet peut être déclenché par le service Internet seulement dans certains cas comme par exemple une demande d'accès à des fonctions sensibles du service Internet telles que la modification du profil utilisateur, des opérations bancaires, etc.

Selon un mode particulier de réalisation de l'invention, le procédé peut être exécuté sur un terminal ou un serveur différent du serveur web comme par exemple un serveur apte à supporter des protocoles Internet qui nécessitent une authentification telle que SSH, FTP, etc. avant de pouvoir accéder à des fonctionnalités par exemple fournies en mode « commandes ».

Selon un mode particulier de réalisation de l'invention, le procédé peut, pour déterminer le paramètre d'accès au service Internet de l'utilisateur, rechercher au sein de l'espace de stockage numérique du service d'accès, le premier identifiant du terminal de l'utilisateur. Si le premier identifiant du terminal de l'utilisateur existe au sein de l'espace de stockage numérique du service d'accès alors un deuxième identifiant de l'utilisateur associé au premier identifiant du terminal de l'utilisateur est récupéré depuis ce même espace de stockage numérique. Le premier et le deuxième identifiant de l'utilisateur sont alors comparés et un paramètre de configuration d'accès au service Internet est alors généré en fonction de cette comparaison pour l'utilisateur. Le service Internet est ensuite configuré pour l'utilisateur en fonction du paramètre d'accès. A noter que toutes les manipulations des identifiants/données d'un utilisateur ou d'un terminal utilisateur via des recherches, des comparaisons ou autre, peuvent se faire sur tout ou partie des identifiants/données avec ou sans préfixe/suffixe.

Selon un mode particulier de réalisation de l'invention, l'environnement représenté en figure 1 peut comprendre également un serveur 104 (serveur de confiance) et une base de données 106 accessible depuis le serveur 104. Ce mode de réalisation est par exemple mis en œuvre lorsque le service Internet n'est pas hébergé sur le même serveur que celui du service d'accès. C'est par exemple le cas lorsque le site Internet est un site web bancaire non opéré par l'opérateur de télécommunication de l'utilisateur. Le serveur 102 transmet alors le couple premier identifiant du terminal de l'utilisateur et premier identifiant de l'utilisateur au serveur 104 via par exemple une liaison internet sécurisée ou un réseau privé. Le serveur 104, par exemple opéré par l'opérateur de télécommunication, va alors interroger la base de données 106 et venir rechercher le premier identifiant du terminal de l'utilisateur ou le premier identifiant de l'utilisateur afin et récupérer respectivement le deuxième identifiant de l'utilisateur ou le deuxième identifiant du terminal de l'utilisateur associé. Les couples premier et deuxième identifiant de l'utilisateur et/ou premier et deuxième identifiant du terminal de l'utilisateur sont alors comparés et un paramètre de configuration d'accès au service Internet est alors généré en fonction de cette comparaison pour l'utilisateur. Le service Internet est ensuite configuré pour l'utilisateur en fonction du paramètre d'accès. A noter que toutes les manipulations des identifiants/données d'un utilisateur ou d'un terminal utilisateur via des recherches, des comparaisons ou autre, peuvent se faire sur tout ou partie des identifiants/données avec ou sans préfixe/suffixe.

Selon un mode particulier de réalisation de l'invention, le premier et le deuxième identifiant du terminal de l'utilisateur comprennent une adresse du terminal telle qu'une adresse MAC et/ou une adresse IP et/ou une concaténation de tout ou partie d'une adresse MAC et d'une adresse IP.

Selon un mode particulier de réalisation de l'invention, le premier et le deuxième identifiant de l'utilisateur comprennent toute information permettant d'identifier l'utilisateur telle qu'un numéro de téléphone et/ou une adresse de messagerie et/ou une adresse postale et/ou un nom dudit utilisateur et/ou une concaténation de tout ou partie des exemples d'identifiant de l'utilisateur cités précédemment.

Selon un mode particulier de réalisation de l'invention, le paramètre d'accès peut correspondre à des droits d'accès pour l'utilisateur à un sous ensemble des fonctionnalités fournies par le service Internet. Le paramètre d'accès peut par exemple être appliqué pour certaines fonctionnalités sensibles comme par exemple la modification du profil utilisateur, la réalisation d'opérations bancaires vers des comptes externes, etc.

Selon un mode particulier de réalisation de l'invention, le procédé peut ne pas configurer lui-même l'accès au service Internet pour un utilisateur donné. Il va alors transmettre au service Internet le paramètre d'accès et laisser le service Internet réaliser la configuration en fonction du paramètre d'accès.

Selon un mode particulier de réalisation de l'invention, l'identifiant du serveur 104 peut être obtenu depuis un espace de stockage numérique comme par exemple une base de données. Cet identifiant peut par exemple être une adresse IP ou un nom de domaine (FQDN) du serveur. Cela permet par exemple au serveur 102 de joindre le bon serveur de confiance 104 de l'opérateur de télécommunication de l'utilisateur. Dans un autre mode de réalisation le procédé peut interroger systématiquement les serveurs de confiance des différents opérateurs de télécommunication considérés (4 en France par exemple) et traiter les différentes réponses sachant qu'un seul des opérateurs de télécommunication consultés répondra « positivement » à la requête.

La figure 2 illustre des étapes du procédé de configuration d'accès à un service Internet selon un mode particulier de réalisation de l'invention. L'environnement de mise en œuvre des étapes du procédé correspond à celui décrit à l'appui de la figure 1 dans lequel un serveur 213, dit serveur mandataire, a été ajouté ainsi qu'un espace de stockage numérique 214 tel qu'une base de données, dit base de données de portabilité.

A l'étape 200, le terminal utilisateur 210 envoie une requête d'authentification au serveur web 211 et plus particulièrement au service web hébergé sur le serveur web 211 par exemple via une requête POST https contenant une donnée d'authentification comme par exemple un couple identifiant et mot de passe ou un cookie de session de l'utilisateur. Le service web va interroger à l'étape 201 la base de données 212 pour vérifier l'authentification. Si l'authentification échoue alors le procédé s'arrête. Dans le cas contraire le service va récupérer (202) depuis la base de données 212 un identifiant de l'utilisateur, en fonction de la donnée d'authentification envoyée, comme par exemple son nom, une adresse (postale ou de messagerie) ou un numéro de téléphone. Dans l'exemple décrit ici l'identifiant de l'utilisateur est un numéro de téléphone mobile.

Selon un mode particulier de réalisation de l'invention, la récupération auprès de la base de données 212 de l'identifiant de l'utilisateur peut se faire en même temps que la récupération des données de validation de l'authentification comme par exemple un hash du mot de passe de l'utilisateur, le hash récupéré étant ensuite comparé au hash généré en fonction du mot de passe envoyé via la requête d'authentification 200 pour valider l'authentification.

A l'étape 203, le serveur web / service web à sécuriser envoie par exemple une requête sécurisée HTTPS vers l'URL du serveur mandataire (213), en passant en paramètre la valeur de l'identifiant de l'utilisateur, puis l'adresse IP du terminal de l'utilisateur récupérée dans la requête d'authentification 200, reçue par le serveur web 211, au niveau du champ adresse IP source. Une fois la requête 203 reçue, le serveur mandataire vérifie que le serveur web 211 est bien autorisé à le solliciter. Cette vérification peut par exemple se faire sur la base d'une liste d'adresses IP autorisées, de noms de domaine, des entêtes spécifiques HTTP/HTTPS, etc. Si le service Web n'est pas autorisé à solliciter le serveur mandataire, un code d'erreur, par exemple HTTP 403 Forbidden, est retourné au serveur web 211. Dans le cas contraire, le serveur mandataire extrait l'identifiant de l'utilisateur (ie le numéro de téléphone mobile) de la requête HTTPS et va si besoin le modifier pour le mettre au format E.164 international, puis le mettre au format d'un nom de domaine ENUM (Electronic MUMbering).

A l'étape 204, le serveur mandataire va consulter la base de données de portabilité 214 des numéros de téléphones du pays de l'utilisateur via par exemple le protocole standardisé DNS ENUM. En retour (étape 205), la base de données de portabilité 214 fournira, via par exemple un préfixe, l'identifiant de l'opérateur de télécommunication ayant en charge le numéro de téléphone. S'il n'y a pas de préfixe en retour, cela peut signifier que le numéro de téléphone n'est pas porté. C'est-à-dire qu'il n'a pas été transféré à un opérateur de télécommunication qui n'est pas celui qui a fourni initialement le numéro à l'utilisateur. Dans ce cas, il suffit de consulter la table publique des blocs de numéros de téléphone attribués par l'autorité de réglementation du pays (comme par exemple l'ARCEP en France) pour identifier l'opérateur de télécommunication.

A l'étape 206, le serveur mandataire disposant du nom de l'opérateur téléphonique ayant en charge le numéro de téléphone mobile fourni dans la requête HTTPS reçue (203), il en déduit l'adresse du serveur de l'opérateur de télécommunication (serveur de confiance) à contacter. Cette déduction peut par exemple se faire via une table dédiée qui recense les préfixes des opérateurs de télécommunication associés aux adresses IP ou nom de domaine (FQDN) des serveurs. Le serveur mandataire interroge (206) alors via par exemple une API (REST/HTTP) le serveur de l'opérateur de télécommunication identifié (215), en fournissant en paramètre l'identifiant de l'utilisateur qui est connu de l'opérateur (par exemple le numéro de téléphone) ainsi que l'adresse IP du terminal de l'utilisateur. A noter que ces informations peuvent être fournies de manière chiffrée de sorte à sécuriser les échanges entre le serveur mandataire 213 et le serveur de l'opérateur 215.

A l'étape 206-1, le serveur de l'opérateur de télécommunication consulte un espace de stockage numérique 216 recensant les sessions Internet (fixe et/ou mobile) de l'opérateur comme par exemple une base de données en fournissant comme clef de recherche soit l'identifiant de l'utilisateur (numéro de téléphone), soit l'identifiant du terminal de l'utilisateur comme par exemple l'adresse IP source de la requête 200. A noter que s'il s'agit d'une adresse IP, le serveur de l'opérateur de télécommunication peut au préalable vérifier que cette adresse IP appartient à l'un de ses bloc d'adresses IP. Si ce n'est pas le cas alors un message d'erreur par exemple de type HTTP 404 Not Found peut être renvoyé au serveur web via le serveur mandataire. A l'inverse le serveur de l'opérateur de télécommunication passe à l'étape 206-1

A l'étape 206-2, le serveur de l'opérateur de télécommunication reçoit de l'espace de stockage numérique une réponse à la requête envoyée lors de l'étape 206-1. Si l'identifiant de l'utilisateur n'existe pas dans l'espace de stockage numérique alors un message d'erreur par exemple de type HTTP 404 Not Found peut être renvoyé au serveur web via le serveur mandataire. Si par contre l'identifiant de l'utilisateur existe alors plusieurs cas sont à considérer :
- l'identifiant du terminal de l'utilisateur (par exemple l'adresse IP) associé à l'identifiant de l'utilisateur n'existe pas ou ne correspond pas à celui présent dans la requête 200, dans ce cas le serveur de l'opérateur de télécommunication renvoie au serveur web via le serveur mandataire un message par exemple du type HTTP 403 Forbidden,
- l'identifiant du terminal de l'utilisateur associé à l'identifiant de l'utilisateur existe et correspond bien à celui présent dans la requête 200, dans ce cas, le serveur de l'opérateur de télécommunication retourne un message avec le code HTTP 200 OK et un contenu (par exemple via une structure XML) au serveur Web via le serveur mandataire.

En fonction du statut et du contenu du message 209, le serveur web va adapter l'accès ou non au service ou bien afficher ou non certaines fonctionnalités au niveau du site web et d'une page web retournée à l'utilisateur. De manière optionnelle, le contenu du message peut contenir des informations complémentaires comme par exemple une information de localisation du terminal (domicile, nomade avec ou non l'information concernant le pays) ce qui permet par exemple au serveur web de présenter ou non certaines de ses fonctionnalités à risque à l'utilisateur.

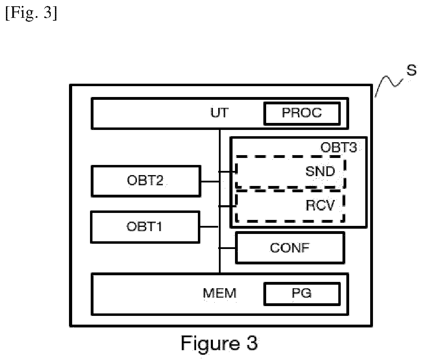

La figure 3 illustre un dispositif S configuré pour mettre en œuvre de procédé de configuration d'accès à un service Internet selon un mode particulier de réalisation de l'invention.

Selon un mode particulier de réalisation de l'invention, le dispositif S a l'architecture classique d'un serveur, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de configuration d'accès à un service Internet tel que décrit précédemment, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre les étapes du procédé de configuration d'accès à un service Internet selon l'un quelconque des modes particuliers de réalisation décrits en relation avec les figures 1 et 2, selon les instructions du programme d'ordinateur PG.

Le dispositif S comprend un module d'obtention OBT1 apte à obtenir au moins un identifiant d'un terminal d'un utilisateur et au moins une donnée d'authentification d'un utilisateur présents dans une requête d'authentification à un service internet. Le dispositif comprend également un deuxième module d'obtention OBT2 apte à obtenir en fonction d'une donnée d'authentification obtenue, au moins un identifiant de l'utilisateur. Le dispositif S comprend de plus un troisième module d'obtention OBT3 apte à obtenir en fonction d'un identifiant de l'utilisateur et d'un identifiant du terminal de l'utilisateur, au moins un paramètre d'accès. Le dispositif S comprend en outre un module CONF apte à configurer l'accès au service Internet pour l'utilisateur en fonction du paramètre d'accès obtenu.

Selon un mode particulier de réalisation de l'invention, le module d'obtention OBT3 comprend un module SND apte à envoyer des messages/requêtes par exemple à un serveur ou à une base de données distante et un module RCV apte à recevoir par exemple les réponses aux messages/requêtes envoyés par le module SND.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé de configuration d'accès à un service Internet, ledit procédé étant mis en œuvre par un serveur, dit serveur web, à la suite d'au moins une requête d'authentification réussie d'un utilisateur pour accéder audit service, ladite au moins une requête d'authentification étant initiée par un terminal dudit utilisateur, **caractérisé en ce que** le procédé comprend:
- une première étape d'obtention d'au moins un identifiant dudit terminal et d'au moins une donnée d'authentification présents dans ladite au moins une requête d'authentification ;
- une deuxième étape d'obtention, en fonction de ladite au moins une donnée d'authentification obtenue, d'au moins un identifiant dudit utilisateur ;
- une troisième étape d'obtention, en fonction dudit au moins un identifiant dudit utilisateur et dudit au moins un identifiant dudit terminal, d'au moins un paramètre d'accès ;
- une étape de configuration, pour ledit utilisateur, dudit service en fonction dudit au moins un paramètre d'accès.

2. Procédé selon la revendication 1 dans lequel la troisième étape d'obtention comprend les étapes suivantes :
- une étape de transmission d'au moins un premier message, à destination d'au moins un serveur, dit serveur de confiance, comprenant au moins ledit identifiant dudit terminal et ledit identifiant dudit utilisateur ;
- une étape de réception d'au moins un second message, en provenance dudit serveur de confiance, comprenant au moins un paramètre d'accès audit service pour ledit utilisateur.

3. Procédé selon la revendication 2 dans lequel l'étape de transmission est précédée d'une étape d'obtention d'une identification dudit serveur de confiance.

4. Procédé selon la revendication 3 dans lequel ladite identification dudit serveur de confiance est obtenue à partir d'une base de données.

5. Procédé selon la revendication 1 dans lequel ledit au moins un identifiant dudit terminal comprend une adresse dudit terminal.

6. Procédé selon la revendication 1 dans lequel ledit au moins un identifiant dudit utilisateur comprend un numéro de téléphone et/ou une adresse de messagerie et/ou une adresse postale et/ou un nom dudit utilisateur.

7. Procédé selon la revendication 1 dans lequel ledit au moins un identifiant dudit utilisateur est obtenu à partir d'une base de données.

8. Procédé selon la revendication 1 dans lequel ledit au moins un paramètre d'accès comprend des droits d'accès pour ledit utilisateur à un sous ensemble des fonctionnalités fournies par ledit service.

9. Procédé de configuration d'accès à un service Internet, ledit procédé étant mis en œuvre par un serveur, dit serveur de confiance, **caractérisé en ce que** le procédé comprend :
- une étape de réception d'au moins un premier message en provenance d'un serveur, dit serveur web, ledit message comprenant au moins un premier identifiant d'un terminal d'un utilisateur et au moins un identifiant dudit utilisateur ;
- une étape d'obtention, en fonction dudit au moins identifiant dudit utilisateur reçu, d'un second identifiant dudit terminal dudit utilisateur ;
- une étape d'émission d'un second message à destination dudit serveur web, ledit second message comprenant au moins un paramètre d'accès, ledit au moins un paramètre étant fonction d'une comparaison entre le premier et le second identifiant dudit terminal dudit utilisateur.

10. Serveur de configuration d'accès à un service Internet, dit serveur web, **caractérisé en ce que** ledit serveur comprend :
- un module d'obtention, suite à au moins une requête d'authentification réussie initiée par un terminal d'un utilisateur pour accéder audit service, d'au moins un identifiant dudit terminal et d'au moins une donnée d'authentification présents dans ladite requête d'authentification ;
- un deuxième module d'obtention, en fonction de ladite au moins une donnée d'authentification obtenue, d'au moins un identifiant dudit utilisateur ;
- un troisième module d'obtention, en fonction dudit au moins un identifiant dudit utilisateur et dudit au moins un identifiant dudit terminal d'au moins un paramètre d'accès ;
- un module de configuration, pour ledit utilisateur, dudit service en fonction dudit au moins un paramètre d'accès.

11. Serveur de configuration d'accès à un service Internet, dit serveur de confiance, **caractérisé en ce que** ledit serveur comprend :
- un module de réception d'au moins un premier message en provenance d'un serveur, dit serveur web, ledit message comprenant au moins un premier identifiant d'un terminal d'un utilisateur et au moins un identifiant dudit utilisateur ;
- un module d'obtention, en fonction dudit au moins identifiant dudit utilisateur reçu, d'au moins un second identifiant dudit terminal dudit utilisateur ;
- un module d'émission d'un second message à destination dudit serveur web, ledit second message comprenant au moins un paramètre d'accès, ledit au moins un paramètre étant fonction d'une comparaison entre le premier et le second identifiant dudit terminal dudit utilisateur.

12. Système de configuration d'accès à un service Internet **caractérisé en ce que** le système comprend :
- au moins un terminal d'un utilisateur, et
- au moins un serveur de configuration d'accès à un service Internet selon la revendication 10, dit serveur web,
- au moins un serveur de configuration d'accès à un service Internet selon la revendication 11, dit serveur de confiance,
le système étant **caractérisé en ce que** le terminal et les serveurs sont configurés pour, lorsque ledit utilisateur s'est authentifié avec succès auprès dudit serveur web, envoyer au moins un premier message comprenant au moins un premier identifiant dudit terminal dudit utilisateur et au moins un identifiant dudit utilisateur audit serveur de confiance, ledit serveur de confiance obtient alors en fonction dudit au moins un identifiant dudit utilisateur reçu au moins un second identifiant dudit terminal et génère en fonction de la comparaison réalisée entre le premier et le second identifiant dudit terminal au moins un paramètre d'accès au service émis via au moins un second message à destination dudit serveur web et lorsque ledit au moins un paramètre d'accès est reçu par ledit serveur web, ledit serveur web configure le service Internet en fonction du paramètre d'accès reçu pour ledit utilisateur.

13. Programme d'ordinateur comportant des instructions pour la mise en œuvre du procédé selon l'une quelconque des revendications 1 à 9, lorsque le programme est exécuté par un processeur.
